# EUROPEAN PATENT APPLICATION

(11) **EP 1 104 074 A1**
(43) Date of publication of application: **30.05.2001**
(21) Application number: 99309061.2
(22) Date of filing: 15.11.1999
(51) Int. Cl.: H02J 7/00, H02H 7/18

(54) **Voltage limiter for use in circuits permissive of linear adjustments in parallel with battery sets**

(71) Applicant: Yang, Tai-Her, Si-Hu Town, Dzan-Hwa (TW); Chen, Yang, Sanchung City, Taipei Hsien (TW)
(72) Inventor: Yang, Tai-Her, Si-Hu Town, Dzan-Hwa (TW); Chen, Yang, Sanchung City, Taipei Hsien (TW)
(74) Representative: Pratt, David Martin

(57) **Abstract**

Voltage-limiting device with advanced linear adjustment capability, of novel design and low cost for realization, possible for matching with saturation voltage VS which originates from any known Battery Pack, capable of limiting, through linear adjustments and by way of an impedance ZO seriesly connected to diode or zener diode, currents passing through said diode or zener diode once, following charging of the Battery Pack, the Battery Pack Terminal voltage VB has risen to a level beyond the forward voltage drop VF of said diode or zener diode, so that saturation charging is assured for a Battery Pack whichsoever of any rated saturation voltage whatsoever, meanwhile excessive charging, or damage to diodes or zener being in parallel with the Battery Pack owing to excessive charging are prevented altogether.

## Description

### BACKGROUND OF THE INVENTION

### (a) Field of the Invention

A circuit device for the purpose of voltage restriction which is a novel design permissive of linear adjustments and compatible with the Saturated Voltage VS of a Battery Set of any Description.

### (b) Description of the Prior Art

In the instance where a charging is prosecuted with respect to the output terminal of a multiple voltage output ckt. which consists of a forward diode voltage drop effect or alternatively a zener-diode voltage such as is disclosed in the U.S. Patent 5,118,993 that is granted to the applicant hereunder, by connecting a Battery Pack straight in parallel thereto, or else in an instance where, as per traditional practicing, a diode is connected directly in parallel with the Battery Pack to provide voltage-limiting tributary currents by the realization of a diode-forward voltage drop VF, it is noted that as the Battery Pack is being charged, the Battery Pack Terminal Voltage VB will increase gradually in proportion to accumulated charging to a level close to the forward diode voltage drop VF which ultimately comes to a point in par with the Battery Pack Terminal Voltage VB that is ascending commensurate with cumulative charging, whereby a steady status is reached, in the event, however, should the voltage drop in the forward direction due to the parallel diode VF differ from the rated saturation voltage VS of the Battery Pack, since that the diode forward voltage drop VF is roughly vulnerable to a stage by stage fluctuation by the rate of 0.7V per series connection of diode, it would be very difficult to effect matching with the rated Battefy Pack saturation voltage by altering serial connection of diodes, indeed up to this date there has been no revelation or disclosure available which teaches linear adjustment or matching between both; so it follows then that the traditional practicing of connecting diodes in parallel with the Battery Pack straight will inevitably incur two shortcomings in the course of charging:1. Where the diode is not protected by a seriesly connected current limiter therewith, then the current flowing through the diode when both the diode forward voltage drop VF and the Battery Pack Terminal Voltage VB reached a steady state will increase abruptly to result eventually in burning of the diode; 2. The diode forward voltage drop VF being inconsistent with the charging voltage nominally required by the Battery Pack, resulting inevitably in retarded or inadequate charging if VF is the lesser, or alternatively overcharging if VF is the greater.

### SUMMARY OF THE INVENTION

The present invention features a more advanced capability allowing for linear adjustments as well as a simplified, cost-effective circuit design, the circuit device making possible matching with the saturation voltage VS of various Battery Packs, highlighted in effecting current limitation in the form of linear adjustments by means of an impedance 20 connected in series with the diode or zener diode, of the current flowing past the said diode or zener diode at a moment when the Battery Pack is being charged and that the Battery pack Terminal Voltage VB is increasing to a point beyond the diode forward voltage drop VF or instead the zener voltage of said zener diode, so that Battery Pack irrespective of its rated saturation voltage may acquire saturation charging, this in the meantime assuring prevention of overcharging or loss and damage associated therewith, with respect to the diode or zener diode connected in parallel with the Battery Pack in particular.

### BRIEF DESCRIPTION OF THE DRAWINGS

Fig. 1 is a procedural illustration of an overcharging situation on the part of a Battery Pack in direct parallel connection with a diode for voltage-limiting ramifications according to a traditional art.
Fig. 2 is a procedural illustration of an undercharge situation on the part of a Battery Pack in direct parallel connection with a diode for voltage-limiting ramifications according to a traditional art;
Fig. 3 is a procedural illustration of an ideal charging characteristics realized with a Battery Pack that is in direct parallel connection with a diode for voltage-limiting ramifications according to a traditional art;
Fig. 4 is a circuit schematic of the invention a voltage-limiting device permissible of linear adjustments, meant for matching with a single Battery Assembly Pack; and
Fig. 5 is a circuit schematic of the invention a Voltage-limiting device possible for linear adjustments, meant for matching with a multiple of Battery Assembly Packs.

### DETAILED DESCRIPTION OF THE PREFERRED EMBODIMENTS

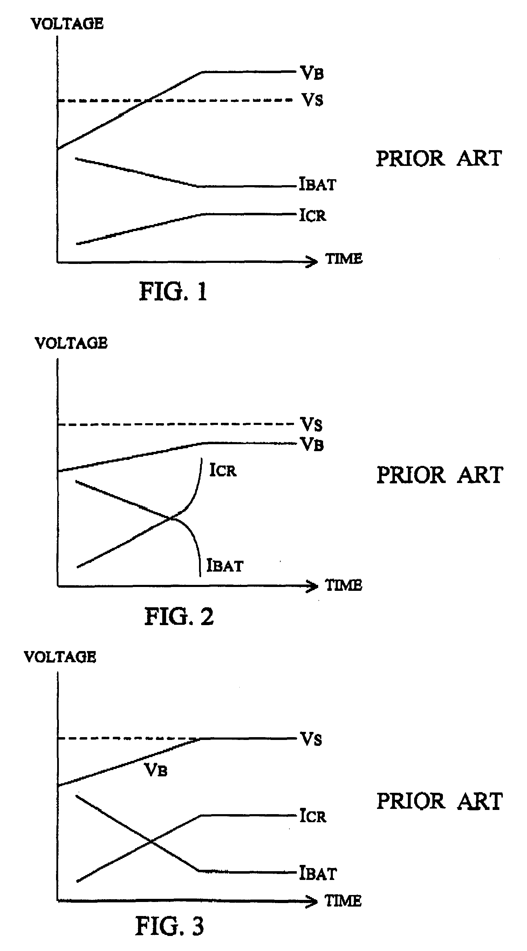

In applications where two serial diodes are connected in parallel across both terminals of a Battery Pack to serve as voltage-limiting ramification elements prosecuted according to prior arts, it will be seen that after sometime of charging to the diodes and the Battery Pack in parallel therewith, the diode forward voltage drop VF and the Battery Terminal Voltage VB will combine to form a stable voltage, current being divided to pass through the diodes on the one hand, through the Battery Pack on the other hand, in cases where the compounded, stable terminal voltage is greater than the standard composite voltage VS of the Battery Pack once the charging comes to saturation, then the charging current IB at the Battery Pack will be too high to damage the Battery Pack due to heating associated with overcharging, (see Fig. 1) in instances, however, where the steady-state compound voltage in the course of charging is lesser than the standard composite voltage VS of the Battery Pack upon charging saturation, the Battery Pack charging current IBAT will be reduced to a minimum or even zero, whereupon full charging of the Battery Pack is impossible (see Fig. 2); such a drawback exists even with U.S. Patent 5,118,993 (Exhibit I) granted previously to the applicant hereunder, as well as EC Patent 0487204 (Exhibit II) granted to the same party hereunder, in the form of a multiple voltage output for the purpose of charging a given Battery Pack; the arrangement to have a diode forward voltage drop VF (or the zener voltage of a zener diode) in parallel with the Battery Pack direct will inevitably incur the shortcoming that when the Battery Pack Terminal Voltage VB while the Battery Pack is active in a charging process exceeds VF, the current passing through the diode ICR will increase abruptly thus failing to achieve the linear adjustment performance, in consequence of which matching is unlikely for the Battery Pack to charge to the extent such that the terminal voltage of a compounded character in steady-state be comparable with the standard voltage VS of the same Battery Pack charged to saturation, so that the ICR passing the diode and the IBAT, that is, the Battery Pack charging current, be in optimum distribution status what follows in suit is that it is impossible to impose restriction on currents passing the diode or zener diode which eventually suffers from over-heating or damage thereform; by contrast, the present invention a circuit device allowing linear adjustments in parallel with Battery Pack is characterized in that one or more than one seriesly connected diodes or zener effect elements comprising at least one zener diode in parallel with a matching Battery Pack, in that state is further connected in series with an impedance serving the purpose of linear current adjustments ZO, meant to form a voltage drop together with the branch current ICR flowing past the said diode or equivalent effect zener elements, so as to produce a VZO that will vary as a function of a fluctuation in said ICR, across the impedance ZO, thereby obtaining a voltage that is being employed to charge the Battery Pack that is needed to effect linear adjustments in response to the magnitude of ongoing branch current, this further forming a chosen and steady composite voltage together with the paralleling Battery Pack, as well as an optimum match comparable with or approximating the saturated standard voltage VS of respective Battery Pack (see Fig. 3); while on the other hand, current flowing through said diode or zener effect element may also receive impedance ZO-induced linear adjustments, in the circuit diagram of a voltage-limiting device possible for linear adjustments matched to a single Battery Pack prosecuted according to the present invention, it is shown to comprise essentially:
--- a serial combination of one or more than on diode or zener element incorporating at least one zener diode, or alternatively two or more kinds of diodes or zener elements in mixed series connection, to be further arranged in series connection with an impedance ZO, featuring voltage-limiting effects derived from the forward voltage drop of the said diode and from the serially connected impedance ZO; the voltage drop produced by the branch current passing the device is meant for match by coupling across both terminals of the Battery Pack with like polarities;
--- Assembly of one single set of cell or a multiple of seriesly connected cell pack, be it of the leaded acid, nickel-hydrogen, nickel-zinc, nickel-cadmium, nickel-iron, lithium type, or any other rechargeable secondary battery, to be coupled to the subject voltage-limiting circuit device permissible of linear adjustments by way of:
   (1) direct paralleling connection relative to both negative/positive polarities, positive to positive, negative to negative;
   (2) like-polarity-to-like-polarity connection to both terminals thereof by means of switch or plug-socket-assembly or coupling terminal P100; positive polarity on the Battery Pack to be in contact with that terminal on the linearly adjustable circuit device through which positive voltage is produced when branch current passes by; whereas the negative polarity on the Battery Pack is to be connected to that terminal on the linearly adjustable circuit device through which negative voltage is produced when branch current passes by.

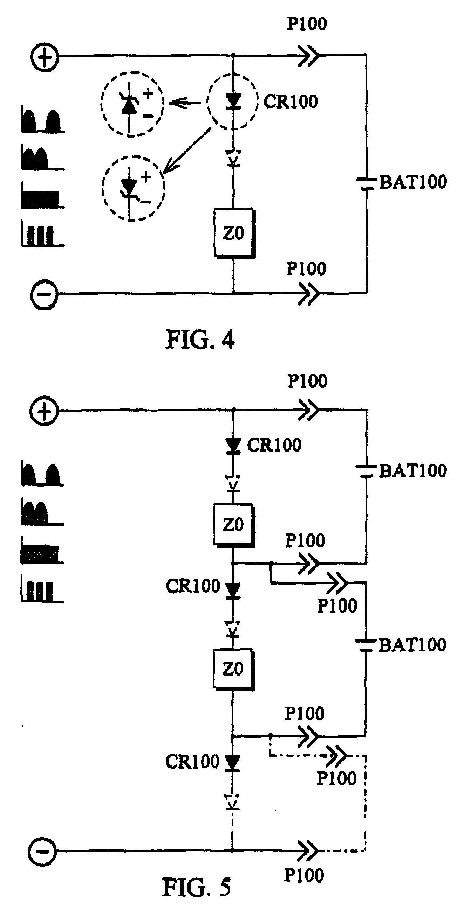

On the linearly adjustable voltage-limiting circuit device in parallel with the Battery Pack such as is illustrated in Fig. 4, the input terminal may be coupled to any of a variety of charging devices, whereby control or cutoff of power supply is dictated by testing of the terminal voltage of the Battery Pack that is being charged, or else by manual cutoff when the charging reaches saturation, or else in reference to the temperature rising effect as the charging reaches saturation, or still in reference to the negative voltage effect as the charging reaches saturation, or alternatively charging to the Battery Pack may be controlled or cut off by a timer device or any other means capable of manipulating charging voltage/current.

Said linearly adjustable voltage-limiting circuit device in parallel with said Battery Pack may further be arranged in series connection with a plurality of peer linearly adjustable voltage-limiting circuit devices on a like-polarity-to-like-polarity basis, so as to constitute a multiple output circuits, such as is illustrated in Fig. 5, comprising essentially:
--- structurally, a series connection of one or more than one diode or zener effect elements containing at least one zener diode, simple series mode or composite series mode included, to be further seriesly connected with an impedance ZO thereby realizing the subject linearly adjustable voltage-limiting circuit device thanks to the forward voltage drop characteristics on the part of a diode, the voltage-limiting feature on the part of zener diode and the serial impedance ZO; further, two or more sets of such a linearly adjustable voltage-limiting circuits are connected in series with like polarity superposed on like polarity, being coupled on a like-polarity-on-like-polarity basis on both terminals of the Battery Pack in compliance with the voltage-drop characteristics brought by branch current passing through said device;
--- leaded acid, nickel-hydrogen, nickel-zinc, nickel-cadmium, nickel-iron, lithium cell, provided singly or in the form of a serial assembly comprising a plurality of cells, or any other cell of the rechargeable secondary type, to be coupled to said linearly adjustable voltage-limiting circuit device by:
   (1) paralleling therewith, like polarities inter-connected altogether;
   (2) the intervention of switches, plug-socket assembly or adaptor P100, so that like polarities thereon are connected to like polarities on said device, with the positive polarity of the Cell connected to that terminal on the said linearly adjustable voltage-limiting circuit from which positive voltage is produced as branch current passes through said circuit; while the negative polarity on the Cell is to be connected to that terminal on said linearly adjustable limiting circuit from which negative voltage is produced as branch current passes through said circuit. The individual output terminal on each linearly adjustable voltage-limiting circuit which is seriesly connected with each other on a like polarity-on-like-polarity basis may be coupled to a chargeable cell so as to charge the cell individually or collectively, again, the assembly of a series of linearly adjustable voltage-limiting circuit characterized by like-polarity-on-like-polarity interconnection, once duly charged, disposes of its output by:
      (1) having the output terminals connected concomitantly to the chargeable cell;
      (2) having part of each linearly adjustable voltage-limiting circuit connected to the chargeable cell, and the remaining part thereof subserving to account for a voltage splitting effect.

Of the linearly adjustable voltage-limiting circuit in parallel with the cell as illustrated in Fig. 5, the input terminal may be coupled to any of a variety of charging circuits, and the charging may be cut off manually once saturation is reached, the cutoff may alternatively be effected by temperature rise which accompanies the saturation, or the negative voltage emerging in the same condition, or still by a timer or any other means convenient and pertinent in control of the charge.

In addition, the diode or zener effect element as connoted in Fig. 4, Fig. 5, the impedance ZO included, may be made from materials described below by taking into account circuitry requirements:
--- For impedance ZO, resistive impedance may be used generally , but inductive impedance, capacitive impedance or two or more out of resistive, inductive, capacitive impedances are preferred in cases where the D.C. power supply is of a ripple pulsating type;
--- For resistive impedance preferably it be of solely Positive Temperature Coefficient (PTC) or Negative Temperature Coefficient (NTC) type, or alternatively be a composite arranged by serial or parallel or compound serial/parallel connection embodying both the PTC and NTC types;
--- For diodes preferably it be one composed of different materials and structural makeup, or alternatively solid state electronic components exhibiting a feature similar to a diode forward voltage drop effect which when the diode turns conductive with current flowing therethrough, emerges.

In summation, the invention a linearly adjustable voltage-limiting circuit device in parallel with a Battery Pack can protect the Battery Pack from charging saturation, and consequently, prevent damage to the same Battery Pack otherwise due to overcharging, the inventive idea as such, in addition, is of a reasonable, low cost, as an additional advantage for realization.

## Claims

1. A linearly adjustable voltage-limiting circuit device in parallel with Battery Pack, comprising: one or more diodes in series connection or zener effect elements incorporating at least one zener diode coupled in parallel to said Battery Pack, this to further incorporate by series connection an impedance ZO meant for linear current regulation so as to form, by the action of a branch current ICR which passes through said diode or said zener effect element, a voltage drop Vzo across both ends of the impedance ZO which is directly proportional to active fluctuation of ICR, said VZO added to a forward voltage drop VF prevailing across said diode or zener effect element, makes a charging voltage required to charge the Battery Pack and permissive of linear adjustment dependent upon the magnitude of said branch current, said charging voltage in the meantime, by being in parallel with said Battery Pack, accounts for s stable voltage matched to or very much approximating the standard saturation voltage VS spoken of each working Battery Pack, while current flowing past said diode or zener effect element is also suitably checked by the resistive impedance ZO, structurally:
--- a series connection of one or more than one diode or zener effect elements containing at least one zener diode, simple series mode or composite series mode included, to be further seriesly connected with an impedance ZO thereby realizing the subject linearly adjustable voltage-limiting circuit device thanks to the forward voltage drop characteristics on the part of a diode, the voltage-limiting feature on the part of zener diode and the serial impedance ZO; further, two or more sets of such a linearly adjustable voltage-limiting circuits are connected in series with like polarity superposed on like polarity, being coupled on a like-polarity-on-like-polarity basis on both terminals of the Battery Pack in compliance with the voltage-drop characteristics brought by branch current passing through said device;
--- leaded acid, nickel-hydrogen, nickel-zinc, nickelcadmium, nickel-iron, lithium cell, provided singly or in the form of a serial assembly comprising a plurality of cells, or any other cell of the rechargeable secondary type, to be coupled to said linearly adjustable voltage-limiting circuit device by:
(1) paralleling therewith, like polarities interconnected altogether;
(2) the intervention of switches, plug-socket assembly or adaptor P100, so that like polarities thereon are connected to like polarities on said device, with the positive polarity of the Cell connected to that terminal on the said linearly adjustable voltage-limiting circuit from which positive voltage is produced as branch current passes through said circuit; while the terminal on said linearly adjustable limiting circuit from which negative voltage is produced as branch current passes through said circuit.

2. A linearly adjustable voltage-limiting circuit device in parallel with a Battery Pack according to Claim 1, further comprising a multiple output circuit in like-polarity-on-like-polarity series connection with a plurality of linearly adjustable voltage-limiting circuits;
characterized by:
--- a series connection of one or more diode or zener effect elements containing at least one zener diode, simple series mode or composite series mode included, to be further seriesly connected with an impedance ZO thereby realizing the subject linearly adjustable voltage-limiting circuit device thanks to the forward voltage drop characteristics on the part of a diode, the voltage-limiting feature on the part of a zener diode and the serial impedance ZO; further, two or more sets of such a linearly adjustable voltage-limiting circuits are connected in series with like polarity superposed on like polarity, being coupled on a like-polarity-on-like-polarity basis on both terminals of the Battery Pack in compliance with the voltage-drop characteristics brought by branch current passing through said device;
--- leaded acid, nickel-hydrogen, nickel-zinc, nickelcadmium, nickel-iron, lithium cell, provided singly or in the form of a serial assembly comprising a plurality of cells, or any other cell of the rechargeable secondary type, to be coupled to said linearly adjustable voltage-limiting circuit device by:
(1) paralleling therewith, like polarities interconnected altogether;
(2) the intervention of switches, plug-socket assembly or adaptor P100, so that like polarities thereon are connected to like polarities on said device, with the positive polarity of the Cell connected to that terminal on the said linearly adjustable voltage-limiting circuit from which positive voltage is produced as branch current passes through said circuit; while the terminal on said linearly adjustable limiting circuit from which negative voltage is produced as branch current passed through said circuit. The individual output terminal on each linearly adjustable voltage-limiting circuit which is seriesly connected with each other on a like-polarity-on-like-polarity basis may be coupled to a chargeable cell so as to charge the cell individually or collectively, again, the assembly of a series of linearly adjustable voltage-limiting circuit characterized by like-polarity-on-like-polarity interconnections, once duly charged, disposed of its output by:
(1) having the output terminals connected concomitantly to the chargeable cell;
(2) having part of each linearly adjustable voltage-limiting circuit connected to the chargeable cell, and the remaining part thereof subserving to account for a voltage splitting effect.

3. Linearly adjustable voltage-limiting circuit device in parallel with a Battery Pack according to Claim 1 or Claim 2, whereof the input terminal may be coupled to any of a variety of charging circuits, and the charging may be cut off manually once saturation is reached, the cutoff may alternatively be effected by temperature rise which accompanies the saturation, or the negative voltage emerging in the same condition, or still by a timer or any other means convenient and pertinent in control of the charge.

4. Linearly adjustable voltage-limiting circuit device in parallel with a Battery Pack, whereof diode or zener effect element and the Impedance ZO may be made from materials described below by taking into account circuitry requirements;
--- for impedance 20, resistive impedance may be used generally, but inductive impedance, capacitive impedance or two or more out of resistive, inductive and capacitive impedances are preferred in cases where the D.C. power supply is of a ripple pulsating type;
--- for resistive impedance preferably it be of solely positive temperature coeffective (PTC) or negative temperature coefficient (NTC) type, or alternatively be a composite arranged by serial or parallel or compound serial/parallel connection embodying both the PTC and NTC types;
--- for diodes preferably it be one composed of different materials and heterogenous structural makeup, or alternatively solid state electronic components exhibiting a feature similar to a diode forward voltage drop which emerges when the diode turns conductive with current flowing therethrough.

5. A linearly-adjustable voltage-limiting device with advanced linear adjustment capability, for matching with the saturation voltage VS of a battery pack, the device comprising at least one diode coupled in parallel with the battery pack, an impedance ZO in series with said at least one diode, the device being such that currents passing through said at least one diode, following charging of the battery pack, cause the battery pack terminal voltage VB to rise to a level beyond the forward voltage drop VF of said at least one diode, so that saturation charging is assured for the battery pack whatsoever the rated saturation voltage, whilst preventing excessive charging, or damaging to said at least one diode.
